# EUROPÄISCHE PATENTSCHRIFT

(11) **EP 1 691 337 B1**
(45) Veröffentlichungstag und Bekanntmachung des Hinweises auf die Patenterteilung: **09.08.2017**
(21) Anmeldenummer: 05018533.9
(22) Anmeldetag: 25.08.2005
(51) Int. Cl.: G07C 9/00, B60R 25/00, E05B 65/00

(54) **Verfahren zur Generierung eines Schaltsignals zur Änderung des Verriegelungszustandes eines Fahrzeugtürverriegelungssystems und Türentriegelungssystem zur Durchführung eines solchen Verfahrens**
Method for generating a switching signal for changing the locking state of a vehicle door device and door locking system for carrying out such a method
Procédé permettant de générer un signal de changement de l'état de verrouillage d'un dispositif de porte de véhicule et système de verrouillage de porte pour la mise en oeuvre de ce procédé

(43) Veröffentlichungstag der Anmeldung: 16.08.2006
(73) Patentinhaber: Microchip Technology Germany GmbH, 82205 Gilching (DE)
(72) Erfinder: Richter, Wolfgang, 82110 Germering (DE)
(74) Vertreter: Grubert, Andreas

(56) Entgegenhaltungen:
- WO-A-2004/063504
- DE-A1- 10 238 134
- DE-A1- 10 315 845

## Beschreibung

Die Erfindung bezieht sich auf ein Verfahren zur Generierung eines Schaltsignals zur Änderung des Verriegelungszustandes eines Fahrzeugtürverriegelungssystems in Verbindung mit einer Autorisierungsprüfung. Weiterhin bezieht sich die Erfindung auf ein zur Anwendung dieses Verfahrens vorgesehenes Türentriegelungssystem. Es sind Kraftfahrzeug-Schlüsselsysteme bekannt, bei welchen der Verriegelungszustand einer Fahrzeugtüre durch eine anwenderseitig mitgeführte Schaltungseinrichtung geändert werden kann, wobei diese Schaltungseinrichtung insbesondere funkbasiert mit einer fahrzeugseitig vorgesehenen Schaltung kommunizieren kann und eine Änderung des Schaltzustandes unter Berücksichtigung des Ergebnisses einer Autorisierungsprüfung erfolgt. Die Änderung des Verriegelungszustandes des Kraftfahrzeuges, insbesondere ein Entsperren der Türverriegelung kann herbeigeführt werden, wenn sich diese anwenderseitig zu tragende Schaltung hinreichend nahe bei dem entsprechenden Kraftfahrzeug befindet. Es sind auch Systeme bekannt, bei welchen ein Ver- oder Entriegeln der Fahrzeugtüre erst erfolgt, wenn anwenderseitig die mobile Schaltungseinrichtung in besonderer Weise, z.B. über einen an dieser vorgesehenen Schalter betätigt wird. Es sind auch Systeme bekannt, bei welchen zusätzlich zu den seitens der mobilen Schaltungseinrichtung abgegebenen Signalen, durch fahrzeugseitig vorgesehene Schalter oder Sensorflächen festgestellt wird, ob der Verriegelungszustand der Türe zu ändern, insbesondere ob die Türe zu entriegeln ist. Die Offenlegungsschrift DE 102 38 134 A1 offenbart eine solche Schaltungsanordnung für eine Fahrzeugtürverriegelung, bei welcher durch Berührung einer fahrzeugseitigen Komponente durch den Träger einer mobilen Schlüsseleinrichtung ein Signal an die Schliessanlage kommuniziert wird, welches zuvor auf kapazitivem Wege in die die Schlüsseleinrichtung tragende Person eingekoppelt wurde.

Bei diesen bekannten Systemen besteht das Problem, dass der zur Durchführung der Autorisierungsprüfung zwischen der anwenderseitig mitgeführten Schaltung und der fahrzeugseitigen Schaltung erforderliche Signalaustausch Manipulationen zugänglich ist, oder der Schließzustand der Türe anderweitig in ungewünschter, oder unbeabsichtigter Weise geändert wird.

Der Erfindung liegt die Aufgabe zugrunde, Lösungen bereitzustellen, durch welche sich insbesondere auf dem Gebiet der Kraftfahrzeugtechnik für anwenderseitig intentionsgetreu veranlasste Änderungen des Verriegelungszustandes einer Fahrzeugtüre und ggf. auch für anderweitige im Rahmen der Nutzung eines Kraftfahrzeuges relevante Abläufe, Vorteile gegenüber den entsprechenden bisherigen Konzepten ergeben. Gemäß einem ersten Aspekt der vorliegenden Erfindung wird diese Aufgabe gelöst durch ein Verfahren zur Generierung eines Schaltsignals zur Änderung des Verriegelungszustandes eines Fahrzeugtürverriegelungssystems nach Anspruch 1. Dadurch wird es auf vorteilhafte Weise möglich, die Änderung des Verriegelungszustandes eines Kraftfahrzeuges über einen Signalverarbeitungsprozess herbeizuführen bei welchem zumindest eine teilweise Autorisierungsprüfung zu einem dem eigentlichen Öffnen vorgelagerten Zeitpunkt eingeleitet und vorzugsweise auch weitgehend abgeschlossen wird und die endgültige Auswertung hinsichtlich der Ausgabe eines den Schaltzustand ändernden oder beibehaltenden Auswertungssignales erst erfolgt, wenn der autorisierte Anwender mit einer der Türschaltungseinrichtung zugeordneten Struktur, insbesondere der Türgriffeinrichtung in Kontakt tritt. Hierdurch wird es auf vorteilhafte Weise möglich interferenz- und kollisionsfrei ein Öffnen der Türeinrichtung erst zuzulassen, wenn ein mit einer entsprechenden Schlüsseleinrichtung ausgestatteter Anwender mit einer der Türeinrichtung zugeordneten Struktur in einen vorzugsweise vorgangstypischen physischen Kontakt tritt. Gemäß der Erfindung erfolgt die Signalübertragung zwischen der anwenderseitigen Schaltungseinrichtung und der fahrzeug- oder türssystemseitigen Schaltungseinrichtung zumindest phasenweise auf Grundlage feldelektrischer bzw. kapazitiver Wechselwirkungseffekte. Hierdurch wird es möglich, den Datentransfer in einer hinsichtlich des Signalweges weitgehend hermetisch abgeschlossenen, oder insbesondere aufgrund der geringen Signalreichweite Manipulationssystemen besonders schwer zugänglichen Weise abzuwickeln. Es ist möglich, sowohl den der physischen Berührung türseitiger Komponenten vorgelagerten Signalaustausch, als auch den bei dieser - Berührung - noch stattfindenden Signalaustausch auf Grundlage jener kapazitiver Wechselwirkungseffekte abzuwickeln.

Die Einleitung des vorbereitenden Signalaustausches kann hierbei eingeleitet werden, sobald sich eine hinreichende Koppelung zwischen der anwenderseitig mitzuführenden Schaltung und dem türseitigen stationären bzw. fahrzeugseitig vorgesehenen System ergibt. Diese hinreichende Koppelung kann insbesondere dann erreicht werden, wenn sich die Hand des Fahrers innerhalb eines vorgegebenen Umkreises von beispielsweise 20cm von einer Türgriffeinrichtung befindet. Die Signalauswertungsprozeduren sind so gestaltet, dass die zumindest bei üblichen Annäherungsgeschwindigkeiten an einen Fahrzeugtürgriff bis zur Berührung dieses Griffs verbleibende Zeit zur zumindest teilweisen, vorzugsweise vollständigen Abwicklung einer Autorisierungsprüfung ausreicht. Das durch den Anwender bei Berührung der Erfassungsstruktur, insbesondere den Türgriff in diese, bzw. diesen eingekoppelte Signal trägt ein Datentelegramm oder zumindest einer Validierungsprüfung zugängliche Inhalte oder Charakteristika. Der Inhalt des Datentelegramms wird unter Zugrundelegung von Verschlüsselungsprozeduren festgelegt. Der Inhalt des Datentelegramms kann nach Maßgabe von Informationsinhalten bestimmt werden die im Rahmen der Aktivierung und/oder des folgenden Signaltransfers zwischen der mobilen Schaltungseinrichtung und der fahrzeugseitigen Schaltungseinrichtung ausgetauscht werden.

Vorzugsweise wird das Datentelegramm nach Maßgabe einer im Bereich der Autorisierungsschaltungseinrichtung abgearbeiteten Signalverarbeitungsprozedur generiert diese Signalverarbeitungsprozedur umfasst vorzugsweise Verschlüsselungsunterprozeduren. Diese Signalverarbeitungsprozedur generiert das Datentelegramm vorzugsweise unter Berücksichtigung von Dateninhalten, die seitens der Türschaltungseinrichtung bereitgestellt werden. Zur Abwicklung des erfindungsgemäßen Signaltransfers können auch weitere Signalübertragungskonzepte ergänzend herangezogen werden.

Die Aktivierung oder Initiierung der Datenübertragung von der anwenderseitigen Schaltung zu dem türseitigen System kann erfolgen, indem vom türseitigen System mit hinreichend hoher Widerholungsfrequenz Rufsignale ausgegeben werden. Sobald das anwenderseitig mitgeführte mobile Schaltungssystem diese Rufsignale wahrnimmt, kann auf Seiten des mobilen anwenderseitigen Schaltungssystems die Generierung und Ausgabe von entsprechenden Antwortsignalen erfolgen. Diese Antwortsignale werden vorzugsweise auf Grundlage kapazitiver Wechselwirkungseffekte in den Anwender eingekoppelt. Alternativ hierzu, oder auch in Kombination mit dieser Maßnahme ist es auch möglich, die Antwortsignale funkbasiert, z.B. nach Maßgabe eines Bluetooth Protokolls, oder in einem anderweitigen, vorzugsweise freien Frequenzband zu übermitteln. Die eingekoppelten Signale können von dem türseitigen System erfasst werden, sobald der Anwender sich hinreichend nahe an der türseitigen Schnittstellenstruktur befindet.

Es ist möglich, die Rufsignale derart zu generieren, dass auf deren Grundlage ein als zulässig verifizierbares Antwortsignal durch die anwenderseitige mobile Schaltungseinrichtung generierbar ist. Es ist möglich, die Informationsdichte oder den Informationsinhalt der zwischen den beiden Systemen ausgetauschten Signalen schrittweise zu erhöhen. So ist es möglich, das Rufsignal zunächst als Signal mit niedrigerer Informationsdichte, insbesondere als niederfrequentes Signal zu generieren, und die Informationsdichte zu erhöhen, sobald der Dialog zwischen den Systemen bestimmte Kriterien erfüllt, oder anderweitige Umstände eine Dialogbereitschaft erkennen lassen.

Es ist möglich, für ein Fahrzeug mehrere anwenderseitig zu führende mobile Schaltungseinrichtungen vorzusehen, die sich ggf. in ihrem Aufbau und/oder ihrer Konfiguration unterscheiden können. Es ist möglich, das System insgesamt derart zu konfigurieren, dass dieses das Eindringen oder Vorhandensein mehrerer anwenderseitig zu führender Schaltungseinrichtungen in die Dialogsphäre zulässt. Es ist möglich, insbesondere durch Gestaltung der Rufsignale einen zumindest hinreichend kollisionsfreien Datenaustausch zu bewerkstelligen. Hierzu ist es möglich, der Anzahl an unterschiedlichen Karten entsprechend unterschiedliche Rufsignale auszusenden, oder auf die Rufsignale mit unterschiedlicher zeitlicher Verzögerung zu antworten. Die Verzögerungszeit und/oder auch der Informationsinhalt des Antwortsignals kann in Abhängigkeit von Informationsinhalten des Rufsignales abgestimmt werden.

Zu jedem Auto gehören beispielsweise drei Karten (1,2,3). Der Anwender geht auf das Auto zu, nähert sich dem Griff, ab 10 bis 20cm startet die Kommunikation zwischen Karte und Empfänger. Der Empfänger im Auto fragt jetzt a) ist dort meine Karte und gleichzeitig b) ist dort Karte 1, 2 oder 3. Hat der Anwender Karte 1 und z.B. 3 dabei, antwortet zuerst Karte 1. Dadurch erspart man sich die zeitfordernde Abarbeitung von Anti-Collision-Protokollen und somit mindestens 20ms im gesamten Vorgang. Das wiederum bedeutet, dass eine langsamere Mechanik verwendet werden kann, was wiederum preiswerter ist.

Die türsystemseitige Schnittstelleneinrichtung umfasst vorzugsweise mehrere diskrete Signalübertragungszonen. Es ist möglich, eine nach außen, bzw. typischerweise zum Anwender hin freiliegende Schnittstelleneinrichtung so auszubilden, dass diese primär der Abwicklung eines berührungslosen Signaltransfers, vorzugsweise auf Grundlage kapazitiver oder elektrostatischer Wechselwirkungseffekte dient. Eine vorzugsweise der berührungsbehafteten Signalübertragung dienende Signalübertragungszone kann so angeordnet und ausgebildet sein, dass diese im Rahmen eines handlungstypischen Ablaufs berührt wird. Insbesondere ist es möglich, bei einer Fahrzeugtürgriffeinrichtung eine zur Einleitung eines Entriegelungsvorganges vorgesehene Signalübertragungszone im Innenbereich des Griffes anzuordnen, oder so anzuordnen, dass diese beim Öffnen der Fahrzeugtüre typischerweise ergriffen wird. Eine entsprechende Schnittstelleneinrichtung kann auch am Innengriff einer Fahrzeugtüre vorgesehen sein.

Es ist auch möglich, die Türgriffeinrichtung so auszubilden, dass diese im Rahmen der Annäherung eines in diesem Zusammenhang als autorisiert klassifizierten Anwenders aus einer Versenkung herausfährt und dann ergriffen werden kann, wobei nach oder beim Ergreifen der Türgriffeinrichtung ein weiterer, für die endgültige Entscheidung über den Ver- oder Entriegelungsvorgang maßgeblicher Signalaustausch abgewickelt werden kann.

Es ist weiterhin möglich, im Bereich des Türsystems eine Signalübertragungszone vorzusehen, durch welche die Einnahme eines Verriegelungszustands des Türsystems veranlassbar ist. Diese Zone kann sich beispielsweise im Bereich einer Fahrzeug-Schlüsselöffnung oder auch am Türgriff, jedoch vorzugsweise an einer Stelle, die typischerweise beim Schließen der Türe vom Anwender berührt wird.

Es ist möglich, das System so zu konfigurieren, dass dieses die Information gewinnen kann, ob sich die Schaltungseinrichtung 7 innerhalb, oder außerhalb des Fahrzeuges befindet. Befindet sich der Fahrer innerhalb des Fahrzeugs so wird ein Schaltzustand herbeigeführt, der ein Öffnen des Fahrzeugs von innen ermöglicht. Steigt der Fahrer aus dem Fahrzeug aus, befindet sich auch die Karte bzw. Schaltungseinrichtung außerhalb des Fahrzeuges und die Tür wird nach Schließen derselben verriegelt. Die Funktionseigenschaften des Systems sind vorzugsweise über am Fahrzeug vorgesehene Nutzeroberflächen den Wünschen des Anwenders entsprechend softwarebasiert konfigurierbar. Es ist auch möglich, die Konfiguration des Systems im Zusammenspiel mit der anwenderseitig zu tragenden Schaltung abzustimmen. So ist es möglich, mehrere anwenderseitige Schaltungseinrichtung en vorzusehen, und über die jeweilige Schaltungseinrichtung 7 ggf. unterschiedliche Konfigurationen festzulegen. Über diese Schaltungseinrichtungen können auch weitere Abläufe, wie beispielsweise eine anwendergerechte Sitz-, Spiegel- und Lenkradhöhenverstellung sowie anderweitige Komforteinstellungen abgestimmt werden.

Es ist grundsätzlich möglich, die bei physischer Kontaktaufnahme zwischen dem Anwender und der Fahrzeug- oder türseitigen Schnittstelleneinrichtung sprunghafte Erhöhung der Signalübertragungsintensität als Detektionsgrundlage zu verwenden. Alternativ hierzu, oder auch in Kombination mit dieser Maßnahme, ist es auch möglich, anhand von zeitlichen Änderungen der Signaleinkoppelungscharakteristik, beispielsweise anhand eines typischen Intensitätsanstiegsmusters (oder auch Intensitätsabfallsmusters), Dopplereffekten, Kapazitäts- oder Impedanzänderungseffekten, Rücklaufströmen oder dgl. festzustellen, ob tatsächlich eine als zulässig zu klassifizierende Berührung, insbesondere eine einen Entriegelungsvorgang auslösende Berührung vorliegt, oder nicht. Durch derartige Überprüfungen, oder ergänzende Signalbetrachtungen wird es möglich, Fehlfunktionen, beispielsweise durch Verschmutzungen, Feuchtigkeit, oder anderweitige unmaßgebliche Fremdeinflüsse mit erhöhter Sicherheit auszuschließen. Diese ergänzende Signalbetrachtung kann unter Einschluss des Anwenders und der durch diesen geführten Schaltungseinrichtung erfolgen. Es ist auch möglich, diese ergänzende Signalbetrachtung so durchzuführen, dass die Berührungsdetektion unabhängig davon erfolgt, ob das Berührungsereignis durch einen Anwender verursacht ist, der mit einer Schaltungseinrichtung ausgestattet ist.

Die mobile Schlüsseleinrichtung kann auch so konfiguriert sein, dass diese die Einkoppelung von Signalen in den Anwender ermöglicht, über die im Innenraum des Fahrzeuges weitere Schaltvorgänge näherungs- oder berührungsbasiert veranlassbar sind. So ist es möglich, im Innenbereich des Fahrzeuges eine Kontaktfläche vorzusehen, über welche insbesondere ein Motorstartvorgang veranlassbar ist, wobei auch hierbei eine Autorisierungsprüfung abgewickelt werden kann, die ähnliche Prozeduren einschließt, wie diese bei der Änderung des Türverriegelungszustandes berücksichtigt wurden.

Es ist möglich, die Türverschlusseinrichtungen derart auszubilden, dass die Türe nach Schließen derselben grundsätzlich verriegelt ist, und dieser Verriegelungszustand durch mechanische Betätigungselemente, z.B. den Außentürgriff, oder den Innentürgriff geändert werden kann, wenn ein elektrisch ansteuerbares Kopplungselement eine Übertragung einer mechanischen Bewegung von dem Betätigungselement zu einem Türverschluss nur bei entsprechender Ansteuerung des Kopplungselementes ermöglicht ist. Die Generierung des zur Ansteuerung des Kopplungselementes vorgesehenen Signales kann auf Grundlage einer Auswertung der zwischen dem Fahrzeug und der anwenderseitigen Schaltung übertragenen Informationen erfolgen.

Weitere Einzelheiten und Merkmale der Erfindung ergeben sich aus der nachfolgenden Beschreibung in Verbindung mit der Zeichnung. Es zeigt:
- **Fig. 1**: eine Schemadarstellung eines Kraftfahrzeuges sowie einer (vergrößert dargestellten) mobilen und anwenderseitig mitzuführenden Schaltungseinrichtung;
- **Fig. 2**: eine Prinzipskizze zur Erläuterung eines erfindungsgemäßen Fahrzeugtürverriegelungssystems.

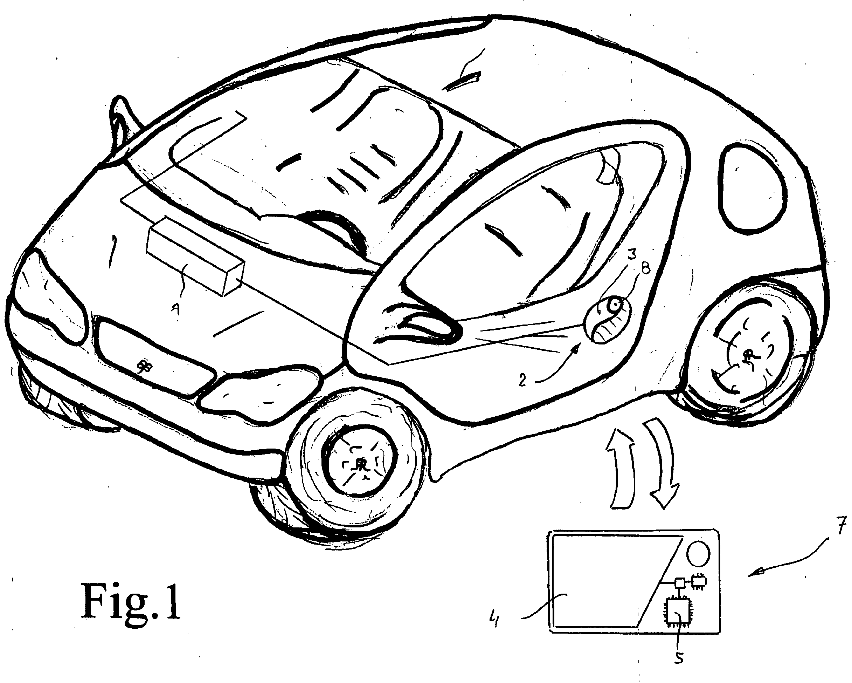

Das in Figur 1 vereinfacht dargestellte Kraftfahrzeug umfasst ein erfindungsgemäßes System zur Änderung des Schließzustandes nicht näher dargestellter, beispielsweise an sich bekannter Türschlosseinrichtungen.

Das System umfasst eine fahrzeugseitig vorgesehene Türsteuereinheit 1 die mit einer türseitigen Schnittstelleinrichtung 2 gekoppelt ist. Die Schnittstelleneinrichtung 2 ist in eine Türgriffeinrichtung integriert und umfasst eine erste Elektrodenfläche 3.

Zur Änderung des Schließzustandes der fahrzeugseitigen Türschlosseinrichtung ist eine mobile, hier vergrößert und lediglich schematisch dargestellte Schaltungseinrichtung 7 vorgesehen. Diese Schaltungseinrichtung 7 hat beispielsweise scheckkartenartige Abmessungen oder ist in einen Schlüssel, oder Schlüsselanhänger oder ein Mobiltelefon integriert. Die Schaltungseinrichtung 7 ist von einem Anwender derart körpernah zu führen, dass unter Einschluss des Anwenders eine Signalübertragung zwischen der fahrzeugseitigen Schnittstelleneinrichtung 2 und einer der mobilen Schaltungseinrichtung 7 zugeordneten Schnittstelleinrichtung 4 bei hinreichender Annäherung ermöglicht ist. Vorzugsweise ist die anwenderseitig zu führende Schaltungseinrichtung derart konfiguriert, dass eine hinreichende Signalübertragung noch dann gewährleistet ist, wenn sich die Schaltungseinrichtung in einem von Anwender geführten Behältnis, z.B. einer Handtasche, einem Rucksack oder dgl. befindet.

Die Schnittstelleneinrichtung 4 der mobilen Schaltungseinrichtung 7 ist hier als Flächenelektrode ausgebildet, zur Einkoppelung von Signalen in den Körper eines Anwenders. Diese Schnittstelleneinrichtung 4 kann bei diesem Ausführungsbeispiel sowohl dem Empfang, als auch der Aussendung von Signalen dienen, wobei die hierzu erforderliche Signaleinkoppelung in den Körper des Anwenders auf Grundlage kapazitiver Wechselwirkungseffekte bewerkstelligt wird. Die in die Schnittstelleneinrichtung 4 einzukoppelnden Signale werden über eine Datenverarbeitungseinrichtung 5 generiert. Die Spannungsversorgung dieses Systems erfolgt über eine in die mobile Schaltungseinrichtung 7 eingesetzte Spannungsquelle 8. Es ist auch möglich, die für den Betrieb der mobilen Schaltungseinrichtung erforderliche Energiezufuhr in anderweitiger Weise, insbesondere durch Absorbermechanismen zu bewerkstelligen.

Das gezeigte System ist derart ausgebildet, dass im Rahmen der Annäherung eines mit der mobilen Schaltungseinrichtung 7 ausgestatteten, und damit autorisierten Anwenders an das entsprechende Fahrzeug, die mobile Schaltungseinrichtung 7 ein in den Umgebungsbereich des Fahrzeugs abgestrahltes, ein Datentelegramm beinhaltendes Rufsignal wahrnimmt.

Nach - Wahrnehmung des Rufsignales nimmt die mobile Schaltungseinrichtung 7 einen Zustand ein in welchem diese eine Signalsequenz mit einem für eine Autorisierungsprüfung vorgesehenen Signalinhalt in den Körper des Anwenders einkoppelt. Diese Signalsequenz kann von einer fahrzeugseitigen, vorzugsweise bereits in Form der Schnittstelleneinrichtung 2 verwirklichten Empfangseinrichtung erfasst und einer vorbereitenden Autorisierungsprüfung zugrundegelegt werden. Der Inhalt der Signalsequenz kann in Abhängigkeit von Inhalten des Rufsignals festgelegt werden. Alternativ zu der hier genanten Vorgehensweise ist es auch möglich, das Rufsignal durch die mobile Schaltungseinrichtung 7 zu generieren und zum Fahrzeug hin auszusenden.

Sobald der Anwender (ggf. durch Prüfung der Signalintensität) definiert hinreichend nahe an die Türgriffeinrichtung herannaht, oder vorzugsweise mit der Türgriffeinrichtung in physischen Kontakt tritt, können die in den Anwender eingekoppelten Signale mit hoher Intensität in die fahrzeugseitige Schnittstelleneinrichtung 2 eingekoppelt und von der Türsteuereinheit 1 verarbeitet werden.

Es ist möglich, bereits im Bereich der Türgriffeinrichtung Schaltungskomponenten vorzusehen, durch welche eine Vorverarbeitung oder zumindest Vorverstärkung der Signale abgewickelt wird.

Es ist auch möglich, die mobile Schaltungseinrichtung 7 so auszugestalten, dass das eine Aktivierung der erfindungsgemäßen Signalübertragung auslösende Rufsignal durch diese mobile Schaltungseinrichtung 7 ausgesendet wird.

Im Bereich der Griffeinrichtung können mehrere Elektrodenzonen ausgebildet sein, wobei dem Umstand, welche Signale über welche Elektrodenzone übertragen werden weitere, für die Steuerung des Ver- oder Entriegelungsablaufes maßgebliche Bedeutung zugemessen werden kann. Ein Innenflächenbereich der Griffeinrichtung kann beispielsweise einer für einen Entriegelungsvorgang maßgeblichen Signaleinkoppelung dienen. Der Umgebungsbereich einer Schlüsseleinstecköffnung 8 kann beispielsweise der Signaleinkoppelung für einen Verriegelungsvorgang dienen.

Durch die erfindungsgemäß ausgestaltete mobile Schaltungseinrichtung 7 können auch dann, wenn sich der Anwender im Innenbereich des Fahrzeuges befindet Signalübertragungsabläufe unter Rückgriff auf eine Autorisierungsprüfung realisiert werden.

Es ist möglich, die Signalintensität derart gering zu halten, dass etwaige Streuereignisse eine nur geringe Reichweite haben. Es ist möglich, dann wenn sich der Anwender im Fahrzeuginnenberiech befindet, im Außenbereich, insbesondere unter Nutzung der Schnittstelenelektroden 2 Störfelder zu erzeugen, so dass ein Dialog mit externen Abfrage oder Dialogsystemen unterbunden ist.

Die erfindungsgemäße mobile Schaltungseinrichtung 7 kann so ausgebildet sein, dass durch diese auch anderweitige Abläufe, insbesondere eine Autorisierung erfordernde Abläufe abwickelbar sind. Die mobile Schaltungseinrichtung 7 kann insbesondere in anderweitige Kommunikationsgeräte oder persönliche Ausstattungsgegenstände, insbesondere eine Armbanduhr oder in Schmuckgegenstände integriert sein.

Der Datenaustausch im Rahmen der vorbereitenden Signalanalyse, oder auch der Signalaustausch zur Systemaktivierung kann auch auf Grundlage elektromagnetischer Wechselwirkungseffekte, insbesondere funkbasiert abgewickelt werden. Die Entscheidung ob eine Änderung des Verriegelungszustandes, insbesondere ein Öffnen der Türe ermöglicht werden soll, wird jedoch unter Berücksichtigung von Signalen abgewickelt die näherungs- oder kontaktbedingt in eine fahrzeugseitige Schnittstelleneinrichtung 2 eingekoppelt werden und nach Maßgabe der mobilen Schaltungseinrichtung 7 generiert sind.

Die Signalmodulation kann insbesondere, jedoch nicht ausschließlich im QPSK-Verfahren erfolgen, die Einkoppelung, oder auch das Lesen von Signalen in bzw. aus dem Körper des Anwenders kann auch über mehrere Elektroden 4 erfolgen.

Die mobile Schaltungseinrichtung 7 kann mit einer Tastatur oder anderweitigen Eingabeeinrichtung versehen sein, durch welche die mobile Schaltungseinrichtung 7 selektiv sperr- oder freigebbar ist.

Über die mobile Schaltungseinrichtung 7 können dem fahrzeugseitigen System auch Daten zur Verfügung gestellt werden, die über anderweitig am Fahrzeug vorgesehene Mittel der Abwicklung von Abläufen, insbesondere der Buchung von Straßennutzungsgebühren dienen (Nutzerindividualisierte Mautabrechnung).

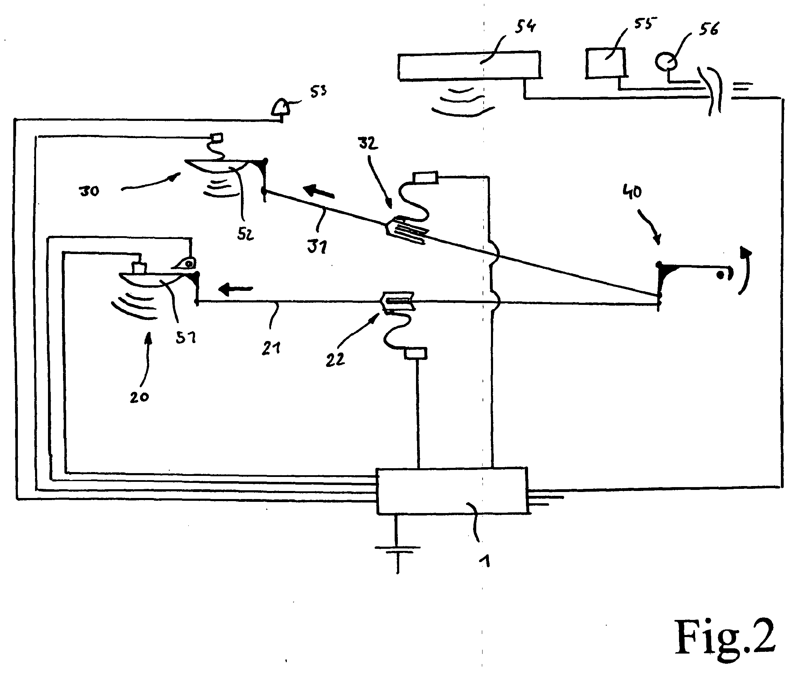

Figur 2 zeigt stark vereinfacht ein Fahrzeugtürverriegelungssystem mit einer Außentürgriffeinrichtung 20 und einer Innentürgriffeinrichtung 30. Beide Türgriffeinrichtungen sind über hier vereinfacht als Gestänge 21, 31 mit einer Verriegelungseinrichtung 40 über elektromagnetische Schaltkupplungen 22, 32 schaltbar mechanisch gekoppelt.

Befinden sich die Schaltkupplungen 22, 32 in einem Kupplungszustand, so kann eine über die entsprechende Griffeinrichtung 20, 30 auf das zugeordnete Gestänge 21, 31 aufgebrachte Stellbewegung (griffnahe Pfeilsymbole) zu der Verriegelungseinrichtung 40 übertragen werden, so dass diese in einen Freigabezustand gelangt. Befinden sich die Schaltkupplungen in einem Passiv-Zustand, so können die Griffeinrichtungen 20, 30 zwar betätigt werden, die auf die Gestänge 21, 31 aufgebrachten Stellbewegungen werden jedoch nicht auf die Verriegelungseinrichtung 40 übertragen. Die Schaltkupplungen 22, 32 können insbesondere elektromagnetisch angesteuerte Klemmmechanismen, beispielsweise Klemmrollenmechanismen aufweisen.

Die Türsteuereinheit 1 steht mit mehreren Schnittstelleneinrichtungen 51, 52, 53, 54, 55, 56 in Signalverbindung. Über diese Schnittstelleneinrichtungen 51, 52, 53, 54, 55, 56 können die ggf. zur Änderung des Verriegelungszustandes, insbesondere temporären Aktivierung der Schaltkupplungen erforderlichen Signale der Türsteuereinheit 1 zugeführt werden.

Die Schnittstelleneinrichtungen 51, 52, 53, 54, 55, 56 können so ausgebildet sein, dass diese eine Näherungsdetektion, und/oder eine Berührungsdetektion ermöglichen.

Bei diesem Ausführungsbeispiel sind die Schnittstelleneinrichtungen 51, 52, und 54 derart ausgebildet, dass ein Signaltransfer schon im Rahmen der Annäherung des Anwenders an die Schnittstelleneinrichtung ermöglicht ist. Die Schnittstelleneinrichtungen 51, 52, sind als Flächenelektroden in die Griffeinrichtungen 20, 30 integriert. Die Schnittstelleneinrichtung 54 dient der Innenraumabfrage, zur Ermittlung ob der Anwender sich im Fahrzeuginnenbereich befindet. Diese Schnittstelleneinrichtung kann in vorteilhafter Weise in ein Armaturenbrett, oder in einen Fahrzeugsitz integriert sein. Die Schnittstelleneinrichtungen 53, 55 und 56, können als Schalter oder berührungssensitive Zonen ausgebildet sein.

Die Schaltkupplungen 22, 32 sind über die zentrale Türsteuereinheit 1 ansteuerbar.

Über die Schnittstelleneinrichtungen 51, 52 können in vorteilhafter Weise auch Rufsignale ausgegeben werden, so dass eine anwenderseitige mobile Schlüsselschaltung in einen Schaltzustand gelangt, in welchem diese ein einer Autorisierungsprüfung zugrundezulegendes Signal aussendet. Dieses Signal, und vorzugsweise auch bestimmte, durch die Annäherung und ggf. Berührung der Schnittstelleneinrichtungen 51, 52, bedingte Eigenschaften des Signales können von der Türsteuereinheit 1 ausgewertet werden.

Nähert sich beispielsweise ein mit einer zulässigen mobilen Schlüsseleinrichtung ausgestatteter Anwender dem Aussengriff 20, so wird diese Schlüsseleinrichtung durch zyklisch über die Schnittstelleneinrichtung 51 ausgesendete Rufsignale aktiviert. Die mobile Schlüsseleinrichtung generiert auf Grundlage von Informationsinhalten des Rufsignales ein verschlüsseltes Antwortsignal. Dieses Antwortsignal wird in den Anwender auf Grundlage elektrostatischer Wechselwirkungseffekte eingekoppelt und bei Annäherung des Anwenders an die Schnittstelleneinrichtung 51 sowie bei Berührung derselben in diese eingekoppelt. Sofern dieses Signal inhaltlich, und vorzugsweise auch im Hinblick auf den zeitlichen Verlauf des Intensitätsanstiegs oder der Kapazität des die Schnittstelleneinrichtung 51 umfassenden Systems bestimmte Kriterien erfüllt, wird durch die Türsteuereinheit 1 die Schaltkupplung 22 angesteuert und die bei Betätigung des Griffes 20 verursacht Gestängebewegung auf die Verriegelungseinrichtung 40 übertragen und diese entriegelt.

Der Anwender kann nunmehr in das Fahrzeug einsteigen und die Türe schließen-. Die Verriegelungseinrichtung gelangt nunmehr in einen Sperrzustand und hält die Türe geschlossen. Die Türe kann in diesem Zustand von einem nicht-autorisierten Anwender nicht von außen geöffnet werden.

Anhand der durch den Anwender mitgeführten Schaltungseinrichtung können auch nachdem sich dieser im Fahrzeug befindet Autorisierungsnachweise erbracht, oder anderweitige anwenderspezifische Daten in innenseitige Schnittstelleneinrichtungen eingekoppelt werden.

Zum Öffnen der Türe wird fahrerseitig die dem Innengriff 30 zugeordnete Schnittstelleneinrichtung 52 berührt. Aufgrund des hierbei stattfindenden Signaltransfers kann über die Türsteuereinheit 1 die Schaltkupplung 32 angesteuert werden. Sofern die Schaltkupplung 32 angesteuert wird, wird eine auf die Innengriffeinrichtung aufgebrachte Stellbewegung über das Gestänge 31 zur Verriegelungseinrichtung 40 übertragen.

## Patentansprüche

1. Verfahren zur Generierung eines Schaltsignals zur Änderung des Verriegelungszustandes eines Fahrzeugtürverriegelungssystems unter Verwendung einer, einer Türeinrichtung zugeordneten Türschaltungseinrichtung und einer einem Anwender zugeordneten mobilen Autorisierungsschaltungseinrichtung auf Grundlage einer Signalübertragung zwischen diesen Schaltungseinrichtungen mit den Schritten:
- Aktivierung wenigstens einer der beiden Schaltungseinrichtungen durch Aussenden eines Aktivierungssignales,
- Generierung einer Identifikationsdatensequenz auf Seiten der mobilen Autorisierungsschaltungseinrichtung,
- Aussenden eines auf der Identifikationsdatensequenz basierenden Identifikationssignales aus dem Bereich der mobilen Autorisierungsschaltungseinrichtung,
- Empfangen des Identifikationssignales auf Seiten der Türschaltungseinrichtung, und
- Auswertung des Informationsinhaltes des auf Seiten der Türschaltungseinrichtung empfangenen Identifikationssignales
- wobei das Aussenden, Empfangen und die Auswertung des Informationsinhaltes des Identifikationssignales zeitlich vor Berührung einer der Türschaltungseinrichtung zugeordneten Erfassungsstruktur aufgenommen wird, und eine Änderung des Verriegelungszustandes erst zugelassen wird, wenn der Anwender eine der Türschaltungseinrichtung zugeordnete Struktur berührt und über den Anwender in jene der Türeinrichtung zugeordnete Erfassungsstruktur ein Signal eingekoppelt wird, wobei die Signalübertragung zwischen der anwenderseitigen Schaltungseinrichtung und der fahrzeug-oder türssystemseitigen Schaltungseinrichtung auf Grundlage feldelektrischer bzw. kapazitiver Wechselwirkungseffekte erfolgt und
- wobei die Signalauswertungsprozeduren derart abgestimmt sind, dass bei üblichen Annäherungsgeschwindigkeiten an einen Fahrzeugtürgriff ab Eintritt in die Dialogsphäre die bis zur Berührung dieses Griffs verbleibende Zeit zur zumindest teilweisen Abwicklung einer Autorisierungsprüfung ausreicht,
- wobei bei Berührung der Erfassungsstruktur, insbesondere des Türgriffs, durch den Anwender in diese ein Signal mit einem Datentelegramm eingekoppelt wird, und der Inhalt des Datentelegramms unter Zugrundelegung von Verschlüsselungsprozeduren festgelegt wird,
- wobei dieses Datentelegramm einer Validierungsprüfung zugrunde gelegt wird, die letztlich über die Freigabe des Ver- oder Entriegelungsvorganges bestimmt,
- wobei das Fahrzeugtürverriegelungssystem eine Außentürgriffeinrichtung umfasst die mit einer Verriegelungseinrichtung über eine elektromagnetische Schaltkupplung schaltbar mechanisch gekoppelt ist, wobei dann, wenn sich die Schaltkupplung in einem Kupplungszustand befindet, eine über die Griffeinrichtung aufgebrachte Stellbewegung zu der Verriegelungseinrichtung übertragen wird, so dass diese in einen Freigabezustand gelangt,
- wobei dann, wenn sich die Schaltkupplung in einem Passiv-Zustand befindet, die Griffeinrichtungen zwar betätigt werden kann, die aufgebrachte Stellbewegung jedoch nicht auf
die Verriegelungseinrichtung übertragen wird.

2. Verfahren nach Anspruch 1, **dadurch gekennzeichnet, dass** das Datentelegramm nach Maßgabe einer im Bereich der Autorisierungsschaltungseinrichtung abgearbeiteten Signalverarbeitungsprozedur generiert wird.

3. Verfahren nach Anspruch 2, **dadurch gekennzeichnet, dass** die Signalverarbeitungsprozedur das Datentelegramm unter Berücksichtigung von Dateninhalten generiert, die seitens der Türschaltungseinrichtung bereitgestellt werden.

4. Verfahren nach wenigstens einem der Ansprüche 1 bis 3, **dadurch gekennzeichnet, dass** die seitens der Türschaltungseinrichtung zu generierenden Daten nach Aktivierung der Türschaltungseinrichtung oder der Autorisierungsschaltungseinrichtung ausgesendet werden.

5. Verfahren nach wenigstens einem der Ansprüche 1 bis 4, wobei die Außentürgriffeinrichtung in einer Versenkung angeordnet ist und bei Detektion einer Annäherung die Außentürgriffeinrichtung aus der Versenkung herausgefahren wird.

6. Türentriegelungssystem zur Bewerkstelligung einer Türentriegelung gemäß dem Verfahren nach wenigstens einem der Ansprüche 1 bis 5.

7. Türentriegelungssystem gemäß Anspruch 6, wobei das Fahrzeugtürverriegelungssystem des Weiteren eine Innentürgriffeinrichtung und zugeordnete elektromagnetische Schaltkupplung umfasst.

8. Türentriegelungssystem gemäß Anspruch 6, wobei die Außentürgriffeinrichtung eine Schnittstelleneinrichtung zur Näherungsdetektion und/oder Berührungsdetektion umfasst.

9. Türentriegelungssystem gemäß Anspruch 8, wobei eine Flächenelektrode in der Außentürgriffeinrichtung integriert ist.

10. Türentriegelungssystem gemäß Anspruch 7, wobei jeweils eine Flächenelektrode in der Außentürgriffeinrichtung und in der Innentürgriffeinrichtung integriert ist.

11. Türentriegelungssystem gemäß einem der vorhergehenden Ansprüche 6-10, wobei das Türentriegelungssystem eine in einem Innenraum eines Fahrzeugs angeordnete berührungssensitive Schnittstelleneinrichtung umfasst.

12. Türentriegelungssystem gemäß Anspruch 11, wobei die berührungssensitive Schnittstelleneinrichtung in einem Armaturenbrett angeordnet ist.

13. Türentriegelungssystem gemäß Anspruch 11, wobei die berührungssensitive Schnittstelleneinrichtung in einem Fahrzeugsitz integriert ist.

## Claims

1. A method for generating a switching signal for changing the locking state of a vehicle door locking system using a door switching device associated with a door device and a mobile authorization switching device associated with a user based on a signal transmission between these switching devices, comprising the steps of:
- activating at least one of the two switching devices by means of transmitting an activation signal,
- generating an identification data sequence on the part of the mobile authorization switching device,
- transmitting an identification signal based on the identification data sequence from the domain of the mobile authorization switching device,
- receiving the identification signal on the part of the door switching device, and
- evaluating the information content of the identification signal received on the part of the door switching device
- wherein transmitting, receiving and evaluating of the information content of the identification signal chronologically is started ahead of contacting a detection structure associated with the door switching device, and a change of the locking state only is allowed when the user touches a structure associated with the door switching device and a signal is coupled into that detection structure associated with the door device via the user, wherein the signal transmission between the user-sided switching device and the switching device on the side of the vehicle or the door system is carried out on the basis of electric field or capacitive interaction effects and
- wherein the signal evaluation procedures are coordinated such that upon common approach velocities towards a vehicle door handle the time remaining from entering into the dialog sphere until contacting this handle is sufficient for at least a partial processing of an authorization verification,
- wherein upon contacting the detection structure, in particular the door handle, by the user a signal comprising a data telegram is coupled therein, and the content of the data telegram is determined taking encryption procedures as a basis,
- wherein this data telegram is subject to a validation check, which eventually decides about the release of the locking or unlocking event,
- wherein the vehicle door locking system comprises an outside door handle device which in a switchable mechanical way is coupled with a locking device via an electromagnetic switching clutch, wherein, when the switching clutch is in a coupling state, an actuation action applied by the handle device is transferred to the locking device, so that it enters a release state,
- wherein, when the switching clutch is in a passive state, the handle device may be actuated, however, the applied actuation action is not transferred to the locking device.

2. The method of claim 1, **characterized in that** the data telegram is generated according to a signal processing procedure processed in the domain of the authorization switching device.

3. The method of claim 2, **characterized in that** the signal processing procedure generates the data telegram with respect to data content, which is provided by the door switching device.

4. The method of at least one of claims 1 to 3, **characterized in that** the data to be generated by the door switching device are transmitted after activation of the door switching device or of the authorization switching device.

5. The method of at least one of claims 1 to 4, wherein the outside door handle device is located inside a recess and the outside door handle device is moved out of the recess upon detection of an approach.

6. A door unlocking system for carrying out a door release according to the method of at least one of claims 1 to 5.

7. The door unlocking system according to claim 6, wherein the vehicle door locking system further comprises an inside door handle device and an associated electro-magnetic switching clutch.

8. The door unlocking system according to claim 6, wherein the outside door handle device comprises an interface device for approximation detection and/or touch detection.

9. The door unlocking system according to claim 8, wherein a surface electrode is integrated in the outside door handle device.

10. The door unlocking system according to claim 7, wherein a surface electrode each is integrated in the outside door handle device and in the inside door handle device.

11. The door unlocking system according to one of the preceding claims 6 to 10, wherein the door unlocking system comprises a touch sensitive interface device arranged in an interior space of a vehicle.

12. The door unlocking system according to claim 11, wherein the touch sensitive interface device is arranged in a dash board.

13. The door unlocking system according to claim 11, wherein the touch sensitive interface device is integrated into a vehicle seat.

## Revendications

1. Procédé de génération d'un signal de commutation pour la modification de l'état de verrouillage d'un système de verrouillage de portière de véhicule à l'aide d'un dispositif de commutation de portière correspondant à un dispositif de portière et d'un dispositif de commutation d'autorisation mobile correspondant à un utilisateur sur la base d'une transmission de signaux entre ces dispositifs de commutation, avec les étapes suivantes :
- activation d'au moins un des deux dispositifs de commutation par l'émission d'un signal d'activation,
- génération d'une séquence d'identification par le dispositif de commutation d'autorisation mobile,
- émission d'un signal d'identification basé sur la séquence de données d'identification à partir de la zone du dispositif de commutation d'autorisation mobile,
- réception du signal d'identification par le dispositif de commutation de portière et
- analyse du contenu des informations du signal d'identification reçu par le dispositif de commutation de portière,
- l'émission, la réception et l'analyse du contenu des informations du signal d'identification étant effectuées avant le contact d'une structure de détection correspondant au dispositif de commutation de portière et une modification de l'état de verrouillage étant autorisée uniquement si l'utilisateur touche une structure correspondant au dispositif de commutation de portière et si l'utilisateur entre, dans la structure de détection correspondant au dispositif de portière, un signal, la transmission des signaux entre le dispositif de commutation côté utilisateur et le dispositif de commutation côté véhicule ou côté système de portière ayant lieu sur la base d'effets d'interaction à champ électrique ou capacitive et
- les procédures d'analyse des signaux étant adaptées de façon à ce que, dans le cas de vitesses d'approche habituelles d'une poignée de portière de véhicule, à partir de l'entrée dans la sphère de dialogue, le temps restant jusqu'au contact avec cette poignée suffise pour le déroulement au moins partiel d'une vérification d'autorisation,
- moyennant quoi, lors du contact de la structure de détection, plus particulièrement de la poignée de la portière, avec l'utilisateur, un signal avec un télégramme de données est entré par l'utilisateur dans celle-ci et le contenu du télégramme de données est déterminé sur la base de procédures de chiffrage,
- ce télégramme de données étant basé sur une vérification de validation, qui détermine finalement l'autorisation du processus de verrouillage ou de déverrouillage,
- le système de verrouillage du véhicule comprenant un dispositif de poignée de portière externe qui est couplé mécaniquement de manière commutable avec un dispositif de verrouillage par l'intermédiaire d'un couplage de commutation électromagnétique, moyennant quoi, si le couplage de commutation se trouve dans un état de couplage, un mouvement de réglage exercé sur le dispositif de la poignée est transmis au dispositif de verrouillage, de façon à ce que celui-ci parvienne à un état de déverrouillage,
- moyennant quoi, lorsque le couplage de commutation se trouve dans un état passif, les dispositifs de poignées sont certes actionnés mais le mouvement de réglage n'est pas transmis au dispositif de verrouillage.

2. Procédé selon la revendication 1, **caractérisé en ce que** le télégramme de données est généré sur la base d'une procédure de traitement de signaux exécutée au niveau du dispositif de commutation d'autorisation.

3. Procédé selon la revendication 2, **caractérisé en ce que** la procédure de traitement de signaux génère le télégramme de données en tenant compte des contenus de données qui sont mis à disposition par le dispositif de commutation de portière.

4. Procédé selon au moins l'une des revendications 1 à 3, **caractérisé en ce que** les données à générer par le dispositif de commutation de portière sont émises après l'activation du dispositif de commutation de portière ou du dispositif de commutation d'autorisation.

5. Procédé selon au moins l'une des revendications 1 à 4, le dispositif de poignée de portière externe est disposé dans un creux et le dispositif de poignée de portière externe sort du creux lors de la détection d'une approche.

6. Système de verrouillage de portière pour la réalisation d'un verrouillage de portière selon le procédé d'après au moins l'une des revendications 1 à 5.

7. Système de verrouillage de portière selon la revendication 6, le système de verrouillage de portière de véhicule comprenant en outre un dispositif de poignée de portière interne et un couplage de commutation électromagnétique correspondant.

8. Système de verrouillage de portière selon la revendication 6, le dispositif de poignée de portière externe comprenant un dispositif d'interface pour la détection d'une approche et/ou la détection d'un contact.

9. Système de verrouillage de portière selon la revendication 8, une électrode plate étant intégrée dans le dispositif de poignée de portière externe.

10. Système de verrouillage de portière selon la revendication 7, une électrode plate étant intégrée dans le dispositif de poignée de portière externe et dans le dispositif de poignée de portière interne.

11. Système de verrouillage de portière selon l'une des revendications précédentes 6 à 10, le système de déverrouillage de portière comprenant un dispositif d'interface sensible au contact, disposé dans l'espace interne d'un véhicule.

12. Système de verrouillage de portière selon la revendication 11, le dispositif d'interface sensible au contact étant disposé dans un tableau de bord.

13. Système de verrouillage de portière selon la revendication 11, le dispositif d'interface sensible au contact étant intégré dans un siège de véhicule.
